# EUROPEAN PATENT APPLICATION

(11) **EP 1 207 474 A2**
(43) Date of publication of application: **22.05.2002**
(21) Application number: 01122400.3
(22) Date of filing: 19.09.2001
(51) Int. Cl.: G06F 17/60

(54) **Inventory control system and method**

(30) Priority: 16.10.2000 JP 2000314638
(71) Applicant: Kabushiki Kaisha Meidensha, Shinagawa-ku, Tokyo 141-0032 (JP)
(72) Inventor: Ishikura, Tomohiko, c/o Kabushiki Kaisha Meidensha, Tokyo 141-0032 (JP)
(74) Representative: Manitz, Finsterwald & Partner GbR

(57) **Abstract**

An inventory control system for use in non-automated warehouses includes a position-measuring unit for measuring a position of a load, a position-measuring server for determining an absolute physical position of each load in accordance with the measured position, and an inventory control unit for developing the determined absolute physical position to a relative logical position. The relative logical position is available for inventory control, and is given by three units.

## Description

### BAKGROUND OF THE INVENTION

The present invention relates to an inventory control system and method for use in non-automated warehouses, which allow inventory control of loads stocked therein by a forklift truck, for example, through the use of measured positional information about the loads.

There are various types of warehouses such as automated warehouse, rack warehouse, and non-automated warehouse, wherein inventory control is achieved by controlling a location or storage place. In inventory control, the position of a load is controlled or provided, irrespective of the type of warehouse, by indication of a row, column, and tier of the load.

By way of example, in the case of non-automated warehouses, an operator operates a forklift truck or carrier to stock a load in a given position, then confirms visually a row, column, and tier of the load, which is manually input to an inventory control book or a terminal. At shipment, the operator confirms in which row, column, and tier a target load is located, then retrieves it by means of the forklift truck.

The layout of a location, which forms definite and static information, needs to be defined as layout of a warehouse at system introduction.

It is noted that the non-automated warehouse involves a warehouse of a simple free space having no equipment on the ground, i.e. a space for holding pallets and items placed or stacked directly. However, in many non-automated warehouses, control of a row and column is carried out by application of paint on the floor as is seen in a parking area.

Currently, operators do inventory control in non-automated warehouses. In that case, the position of a stocked or shipped load is input by an operator through description, e.g. in an inventory control book or operation of a man-machine system, leading to frequent occurrence of an input error. An input error involves a denotation error of a location given by a row, column and tier, and an operation error of a keyboard.

If inventory control breaks down, it will become unclear as to where a target load is located in a warehouse. Moreover, in the above inventory control, since a location is controlled based on definite layout information determined in advance, it is complicated to add and modify arrangement of stocked loads in accordance with the size, kind, etc, of the loads.

### SUMMARY OF THE INVENTION

It is, therefore, an object of the present invention to provide an inventory control system and method for use in non-automated warehouses, which allow easy and reliable inventory control of loads stocked therein.

The present invention provides generally a system for controlling inventory of loads in a space, which are carried with a manned carrier, the system comprising:
a first unit which measures a position of each load;
a server which determines an absolute physical position of each load in accordance with the measured position; and
a second unit which develops the determined absolute physical position to a relative logical position, the relative logical position being available for inventory control, the relative logical position being given by three units.

One aspect of the present invention is to provide a method of controlling inventory of loads in a space, which are carried by a manned carrier, the method comprising:
measuring a position of each load;
determining an absolute physical position of each load in accordance with the measured position; and
developing the determined absolute physical position to a relative logical position, the relative logical position being available for inventory control, the relative logical position being given by three units.

Another aspect of the present invention is to provide a system for controlling inventory of loads in a space, which are carried by a manned carrier, the system comprising:
means for measuring a position of each load;
means for determining an absolute physical position of each load in accordance with the measured position; and
means for developing the determined absolute physical position to a relative logical position, the relative logical position being available for inventory control, the relative logical position being given by three units.

### BRIEF DESCRIPTION OF THE DRAWINGS

The other objects and features of the present invention will become apparent from the following description with reference to the accompanying drawings, wherein:
FIG. 1 is a schematic block diagram showing an embodiment of an inventory control system for use in a non-automated warehouse according to the present invention;
FIG. 2 is a schematic view showing stock/shipment of loads carried out by a forklift truck in a warehouse;
FIGS. 3A-3B are graphical representations illustrating data conversion from the absolute physical position to the relative logical position;
FIG. 4 is a flowchart showing coordinate transformation carried out in the inventory control unit;
FIG. 5 is an explanatory view for explaining coordinate transformation for a relative X coordinate;
FIG. 6 is a view similar to FIG. 5, for explaining coordinate transformation for a relative Y coordinate;
FIGS. 7A-7B are views similar to FIG. 6, for explaining coordinate transformation for a relative Z coordinate; and
FIG. 8 is a view similar to FIG. 2, showing an example of a location having a floor with different levels.

### DETEILAE DESCRIPTION OF THE INVENTION

Referring to the drawings, a description will be made with regard to an embodiment of an inventory control system and method for use in a non-automated warehouse or space. In this embodiment, inventory control is involved in flat-rack inventory control.

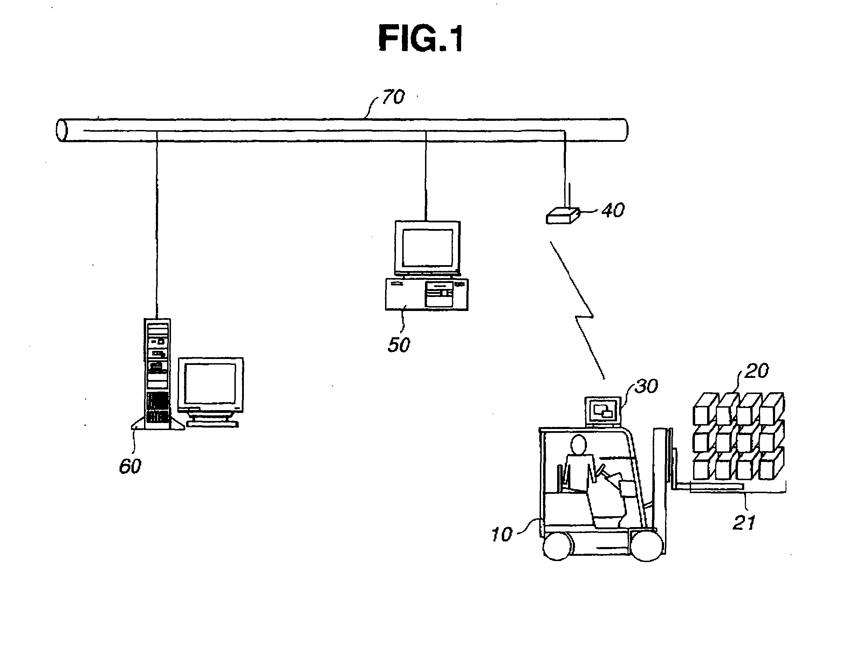

Referring to FIG. 1, the inventory control system is a system wherein the position of a forklift truck or carrier 10 in the warehouse is measured to determine therefrom a location of a stocked load 20, in accordance with which inventory control of the load 20 is carried out. For measuring the position of the load 20, a position-measuring unit (first unit) 30 is mounted on the forklift truck 10 as shown in FIG. 1.

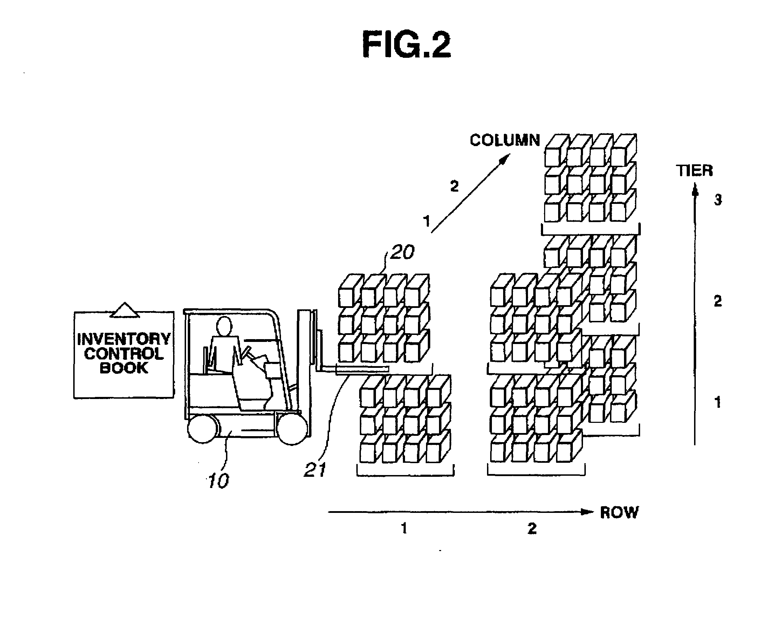

Referring also to FIG. 2, when the forklift truck 10 runs in the warehouse to stock or ship the load 20, the position-measuring unit 30 measures the three-dimensional position of the load 20. One or a plurality of loads 20 is mounted on a pallet 21, which is transported by the forklift truck 10 for stock or shipment. Thus, the position of the load 20 is measured through the position of the pallet 21 on which the load 20 is mounted. The measured three-dimensional position of the load 20 or the pallet 21 is received by a radio relay 40, which is transmitted to a position-measuring server 50 via an Ethemet 70.

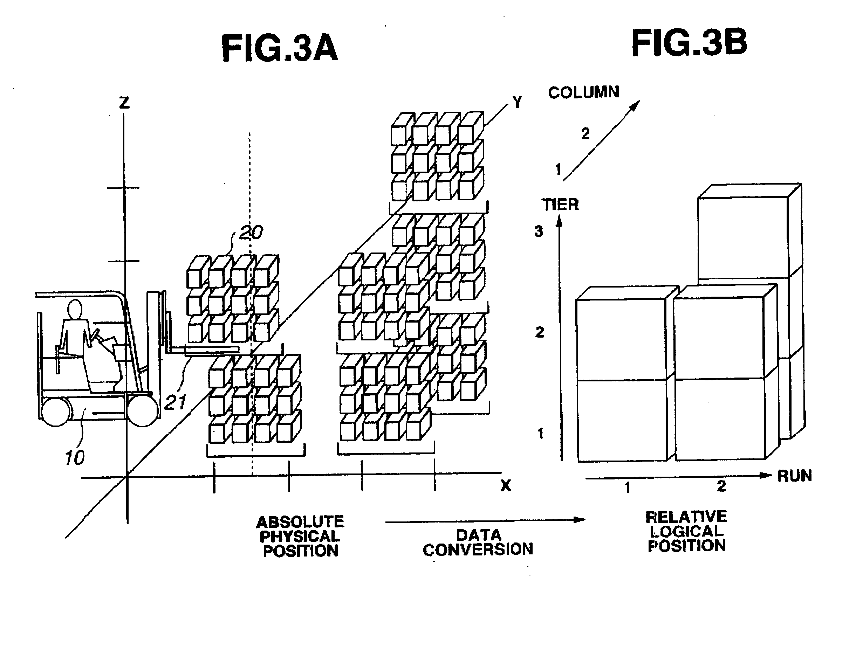

Referring to FIG. 3A, in accordance with information transmitted via the Ethernet 70, the position-measuring server 50 determines by one operation the absolute physical position or three-dimensional space information (X, Y, Z) of the load 20 stocked by means of the forklift truck 10. Moreover, referring to FIG. 3B, an inventory control unit (second unit) 60 develops the determined absolute physical position to the relative logical position or relative arrangement of the load 20, which is controlled together with individual information about the load 20.

The relative logical position is dynamic information varying with arrangement of the loads 20 and given by three units, i.e. column, run, and tier, corresponding to three-dimensional space information. By way of example, the relative logical position of initially stocked load 20 is given by "first column, first row and first tier". The relative logical position of secondly stocked load 20 is given by "first column, first row and second tier", or "first column, second run and first tier", or "second column, first run and first tier" in accordance with the position of the second load 20 with respect to the initial load 20. And the relative logical positions of the third and further loads 20 are given accordingly. When shipping the initially stocked load 20, the relative logical position of the secondly stocked load 20 is automatically changed to first column, first row and first tier".

When shipping all loads 20 belonging to a particular row or column, the loads 20 belonging to a next row or column are advanced successively. Specifically, the relative logical position is varied dynamically in accordance with the relative relationship between the loads 20 to allow easier human understanding, i.e. intuitive recognition of actual arrangement of the loads 20 in the warehouse.

On the other hand, the absolute physical position is involved in the three-dimensional coordinates for the stocked load 20. Though difficult to recognize intuitively for an operator, the absolute physical position is accurate information fixed to correspond to the position of the stocked load 20.

Thus, the relative logical position is not obtained by simple coordinate transformation of the absolute physical position, but by coordinate transformation thereof changed any time in accordance with stock/shipment of the load 20 through mathematical processing. Moreover, since the relative logical position is obtained by developing the absolute physical position, it allows free variation in arrangement of the loads 20 in accordance with their size, kind, etc.

By way of example, when having various kinds of loads such as different-sized loads, conventional inventory control systems do not allow easy inventory control due to need of determining the layout of a warehouse in advance. On the other hand, the inventory control system of the invention is constructed such that the stocked load 20 is measured for the absolute physical position, which is developed to the relative logical position for inventory control. This allows flexible variation in layout of the warehouse in accordance with the kind of load 20, resulting in easy inventory control.

In this context, it can be said that the relative logical position forms indefinite information.

In the illustrative embodiment, in order to cope with the loads 20 stacked for storage, the load 20 is measured for the three-dimensional position. Since vertical information is not significant when laying the loads 20 flat, it is permissible to measure only the two-dimensional position.

The manipulation of the loads 20 involves not only stock/shipment, but also movement in the warehouse

In the illustrative embodiment, various position measuring means can be used such as laser radar and laser navigation.

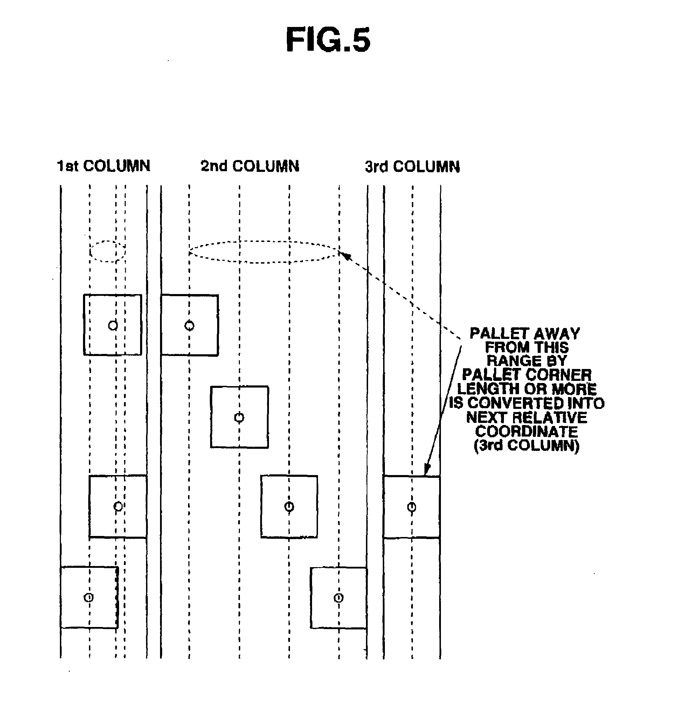

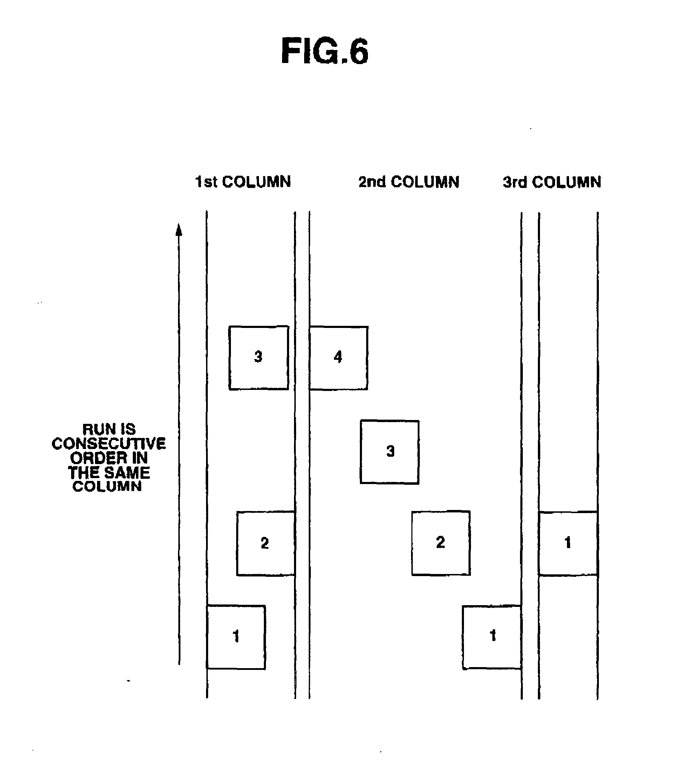

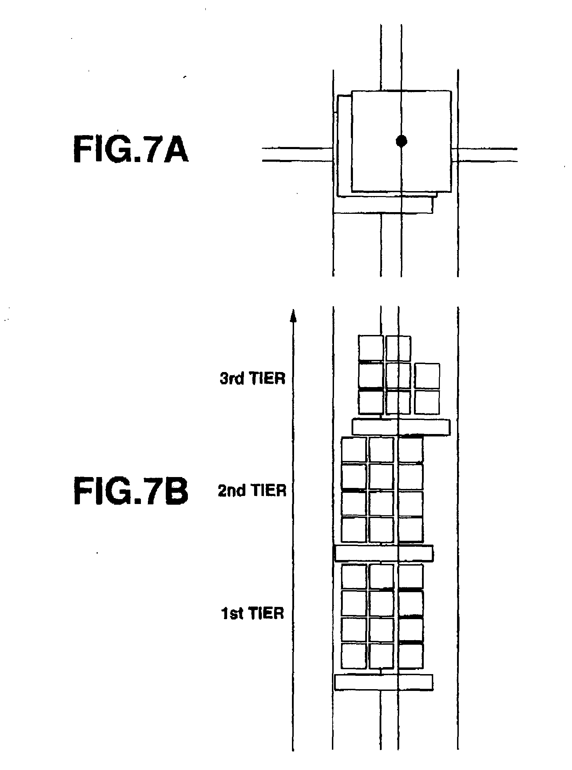

A concrete method of developing the absolute physical position to the relative logical position involves execution of the following location conversion:
1) Data records at first tier are extracted.
   The extraction of data records at first tier is to place at first tier all data records whose Z coordinate in the absolute coordinates is located at a floor level. It is noted that the floor level refers to first tier in the vertical direction, which has second tier, third tier, etc. thereabove in order.
   Based on first tier, a column and run are obtained in accordance with the procedure as will be described later.
   Each data record comprises pallet number, pallet size (W x H), absolute coordinates (X, Y, Z) at a center point of the pallet, relative coordinates (column, run, tier), and other data requisite for control, among which the pallet number and the absolute coordinates (X, Y, Z) at a center point of the pallet are indispensable.
2) For the data records at first tier, the respective columns are obtained from the X coordinate in the absolute coordinates. Specifically, for all data records at first tier, the columns are obtained in accordance with the following procedure for conversion into column or a relative X coordinate at first tier.
   First, the target data records at first tier are sorted in ascending order in the X coordinate in the absolute coordinates.
   Then, by comparing the finite difference in the X coordinate and the pallet-size length for adjacent ones of the sorted data records, it is determined that lapping pallets exist in the same column.
   Referring to FIG. 5, in this conversion flow, a pallet assembly whose finite difference at a pallet center in the absolute coordinates is shorter than a pallet comer length is converted into a column in the same relative X coordinate. Specifically, after sorting the data records in the X coordinate, the pallets whose coordinates lap in the direction of the column are considered to be in the same column.
   The pallet comer length refers to a longer one of the width (W) and the depth (D) of a pallet rectangle.
   Moreover, pallets away from by only a predetermined distance a pallet located at an end of the pallet which is considered to be in the same column are added to the same column.
   This operation is carried out for all target data records, obtaining the column.
   It is noted that the absolute coordinates measured with the position-measuring unit 30 refers to a center point of a pallet.
3) In ascending or descending order in the column, a run at first tier is determined, i.e. the column and run at first tier are determined, Specifically, the data records in the same column obtained at the operation 2) are sorted in the Y coordinate in ascending or descending order for unique determination in accordance with their arrangement as shown in FIG. 6, obtaining conversion into run or a relative Y coordinate at first tier.
   FIG. 6 shows that the first column includes first to third runs from below, the second column includes first to fourth runs from below, and the third column includes a first run only.
4) Since second and further tiers always lie on the first tier, they are determined in accordance with the ascending order of data which lap in the X-Y coordinates at first tier. Specifically, since the column and run at first tier are obtained through processing up to the operation 3), the determination of data records which lie on the first tier provides conversion into n^{th} tier or a relative Z coordinate. More specifically, in n^{th} tier conversion, data records whose tier, column and run and X-Y coordinates lap with respect to first tier are extracted and sorted in ascending order in the Z coordinate for unique determination in accordance with their arrangement as shown in FIGS. 7A-7B.

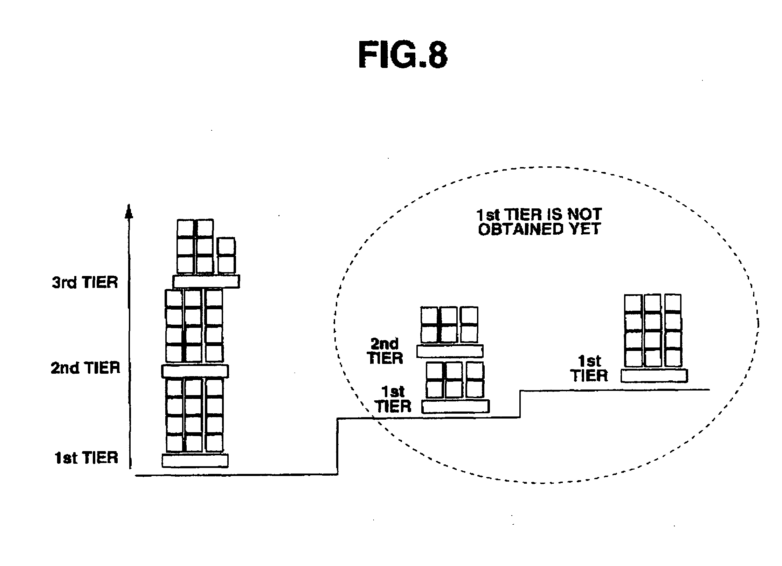

The data records in the same column and run refer to data records whose coordinate difference from the data record at first tier is within the pallet comer length in both the X coordinate and the Y coordinate. Therefore, the tier is obtained by counting data records in the same column and run in ascending order in the Z coordinate. Typically, the first tier is known. However, referring to FIG. 8, when there is originally a step on the floor, and thus the difference in floor level, first processing can provide data records having no first tier information. In that case, with a new floor level established, the same processing is repeatedly carried out with regard to all data records.

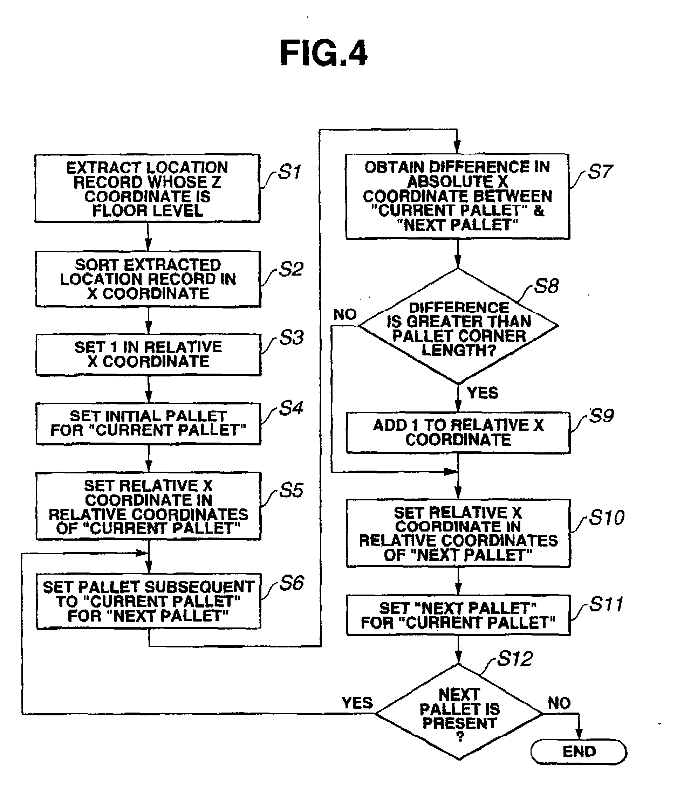

Referring to FIG. 4, the location conversion as described with regard to the operations 1)-4) is carried out wit the inventory control unit 60.

First, location records whose Z coordinate is floor level are extracted (step S1), which are sorted in the X coordinate (step S2). One (1) is set in the relative X coordinate (step S3), and an initial pallet is set for "current pallet" (step S4). The relative X coordinate is set in the relative coordinates of "current pallet" (step S5). Then, a pallet subsequent to "current pallet" is set for "next pallet" (step S6).

The difference in the absolute X coordinate is obtained between "current pallet" and "next pallet" (step S7). It is determined whether or not the difference is greater than the pallet comer length (step S8). If the difference is greater than the pallet comer length, one (1) is added to the relative X coordinate (step S9), whereas if it is not greater than the pallet comer length, the relative X coordinate is set in the relative coordinates of "next pallet" (step S10). Then, "next pallet" is set for "current pallet" (step S11). If a next pallet is present (step S12), flow returns to the step S6, whereas if not, flow comes to an end.

Having described the present invention with regard to the preferred embodiment, it is noted that the present invention is not limited thereto, and various changes and modifications can be made without departing from the scope of the present invention.

The entire teachings of Japanese Patent Application 2000-314638 are incorporated hereby by reference.

## Claims

1. A system for controlling inventory of loads in a space, which are carried with a manned carrier, the system comprising:
a first unit which measures a position of each load;
a server which determines an absolute physical position of each load in accordance with the measured position; and
a second unit which develops the determined absolute physical position to a relative logical position, the relative logical position being available for inventory control, the relative logical position being given by three units.

2. The system as claimed in claim 1, wherein the three units include a tier, a column, and a run.

3. The system as claimed in claim 2, wherein the tier is determined in order from below with regard to the loads which are in the same given level range.

4. The system as claimed in claim 3, wherein the column is determined in order with regard to the loads which are in the same given level range and fail to be away from a given lateral range by a predetermined distance.

5. The system as claimed in claim 4, wherein the run is determined vertically in order with regard to the loads which are in the same column.

6. A method of controlling inventory of loads in a space, which are carried by a manned carrier, the method comprising:
measuring a position of each load;
determining an absolute physical position of each load in accordance with the measured position; and
developing the determined absolute physical position to a relative logical position, the relative logical position being available for inventory control, the relative logical position being given by three units.

7. The method as claimed in claim 6, wherein the three units include a tier, a column, and a run.

8. The method as claimed in claim 7, wherein the tier is determined in order from below with regard to the loads which are in the same given level range.

9. The method as claimed in daim 7, wherein the column is determined in order with regard to the loads which are in the same given level range and fail to be away from a given lateral range by a predetermined distance.

10. The method as claimed in claim 7, wherein the run is determined vertically in order with regard to the loads which are in the same column.

11. A system for controlling inventory of loads in a space, which are carried by a manned carrier, the system comprising:
means for measuring a position of each load;
means for determining an absolute physical position of each load in accordance with the measured position; and
means for developing the determined absolute physical position to a relative logical position, the relative logical position being available for inventory control, the relative logical position being given by three units.
